# EUROPEAN PATENT SPECIFICATION

(11) **EP 2 785 631 B1**
(45) Date of publication and mention of the grant of the patent: **22.02.2017**
(21) Application number: 12794285.2
(22) Date of filing: 26.11.2012
(51) Int. Cl.: B66F 19/00, B66C 19/00

(54) **A CRANE**
KRAN
GRUE

(30) Priority: 29.11.2011 DK 201170658; 29.11.2011 US 201161564638 P
(43) Date of publication of application: 08.10.2014
(73) Proprietor: APM Terminals B.V., 2511 DP Den Haag (NL)
(72) Inventor: GRAPENGIESSER, Volker, 25436 Uetersen (DE)
(74) Representative: Zacco Denmark A/S
(86) International application number: PCT/EP2012/073607
(87) International publication number: WO 2013/079439

(56) References cited:
- EP-A1- 1 923 338
- EP-A1- 2 540 654
- WO-A1-2008/115966
- WO-A1-2010/113704
- DE-A1- 19 803 322
- US-A1- 2008 264 889

## Description

According to a first aspect, the present invention relates to a cargo crane configured for transferring containers to and from a ship birthed alongside a quay.

According to a second aspect, the present invention relates to a set of cargo cranes configured for transferring containers to and from a ship birthed alongside a quay.

The expression "quay" throughout this specification denotes a structure of solid construction along a shore or bank that provides berthing for a ship and generally provides cargo handling facilities e.g. for cranes.

The cargo crane according the first aspect of the present invention, which may be of the type generally known as "Ship To Shore" crane, or simply STS-crane, includes:
- at least one quayside support leg supported by a bogie arranged to travel on a rail,
- at least one landside support leg supported by a bogie arranged to travel on a rail,
- a boom configured to extend over a ship birthed alongside a quay,
- a trolley displaceably connected to the boom, and
- container lifting means connected to the trolley.

The at least one quayside support leg, in a first height, defines an outer horizontal width (A) and, in a second height, the at least one quayside support leg defines an inner horizontal width (B'), defining an opening, wherein the inner horizontal width (B'), of the opening in the second height is greater than the outer horizontal width (A) of the quayside support leg (10) in the first height.

Container cranes such as a ship to shore cranes typically constitute large dockside gantry cranes arranged at container terminals for loading and unloading intermodal containers from container ships. Container cranes consist of a supporting framework that can traverse the length of a quay or yard, and a moving platform generally called a spreader. The spreader can be lowered down on top of a container and locks on to the container's four locking points using a twist lock mechanism. Cranes normally transport a single container at once; however some recent cranes have the capability to pickup either two 40-foot containers or up to four 20-foot containers at once.

### Background

Owners and operators of containerships strive in optimizing every aspect of transport of containers while minimizing costs and environmental impacts.

One relative new proposal for optimization is to reduce the service speed of large containerships significantly whereby fuel consumption is reduced likewise significantly. In order to make up for some of the time lost during sailing, owners and operators now urge container handling facilities, or container terminals, to operate even faster.

The container handling capacity, or the performance, of container terminals using ship to shore cranes are limited by the fact that the ship to shore cranes can, due to their width, work at alternate bays of a container ship only, i.e. every second hatch of the ship is left idle without a crane.

The minimum centre distance between two of today's ship to shore cranes is about 27 m. As the centre distance between container holds of modern container ship is in the range of 15 meters only, leaving every second hatch of the ship idle, or unserviced, while loading or unloading containers, is general-ly accepted for the reason that this drawback simply cannot be overcome by means of today's cranes.

EP 0318264 A discloses a travelling container crane including a mobile gantry configured for sideways movement on fixed ground rails. The crane includes two parallel spaced-apart beams supported by, and extending horizontally from, the gantry in a direction perpendicular to the direction of motion of the gantry. A mobile trolley is supported under each beam and on rails fixed to the beam for to-and-from movement of the trolley along the beam. Hoist able container lifting means is suspended from each trolley. In a preferred embodiment, the third mobile trolley and the associated container-lifting device is supported between the two beams on further rails fixed to the two beams. By this, the third trolley may move along the space between the beams on the said further rails. Summarizing, the crane according to EP 0318264 A discloses a crane with a very wide portal allowing for two or more trolleys operating within the portal.

WO2008/058763 A1 discloses a high performance crane for transferring cargo to and from a ship. The crane include a boom and a trolley where the boom extends essentially perpendicular to a longitudinal rail arranged on the quay such that one end of the boom extends over the ship. The trolley is displaceably connected to a transverse rail of the boom and the trolley includes a lifting device for lifting a load or a group of loads.

EP 2 540 654 A1 discloses a ship to shore crane installation comprises a quay defining a longitudinal and a transverse direction and at least two ship to shore cranes which are displaceable along said quay according to said longitudinal direction. The ship to shore cranes has a gantry structure and a girder supported by the gantry structure. The girder of each ship to shore crane is arranged according to said transverse direction. A trolley is moveable along the girder for transferring a container. The gantry structures of directly adjacent ship to shore cranes are offset with respect to each other in the transverse direction so as to enable simultaneous access to directly adjacent container bays of a container ship.

### Brief description of the invention

It is an object of the present invention to set forth a crane, or a set of cranes, which enables a container terminal to significantly decrease the required time for loading and unloading containers present on board a containership. In particular, it is an object of the present invention to set forth a container crane, or a set of container cranes, allowing for loading and unloading of neighbouring container holds of a containership.

According to the present invention, the above object may be met by the provision of a crane, or a set of cranes, as per the introductory part of this specification wherein the opening allows for long side passage of a 40 or 45 foot container (50).

Alternatively, the least one quayside support leg, in a first height, may define an outer horizontal width and, in a second height lying above or below the first height, the at least one quayside support leg define an inner horizontal width wherein the inner horizontal width in the second height is greater than the outer horizontal width of the quayside support leg in the first height.

Likewise, in accordance with the present invention, the above object may be met by the provision of a crane, or a set of cranes, as per the introductory part of this specification wherein least one quayside support leg, in a first height, define an outer horizontal width and, in a second height lying above or below the first height, the at least one quayside support leg define an inner horizontal width wherein the inner horizontal width in the second height is less than the outer horizontal width of the quayside support leg in the first height.

The effect of configuring the at least one quayside support leg as per the above is that 40 or 45 foot containers may move essentially perpendicular to and from a container hold of a containership free of hindrances caused e.g. by legs or support structures of prior art cranes. In particular, when two neighbouring container cranes loads or unloads containers in two neighbouring container holds, the effect is evident.

According to one embodiment, the container lifting means, the trolley and the boom may be configured to transfer containers to or from a ship by means of passing the containers over a portion of the at least one quayside support leg. The portion of the at least one quayside support leg may lie immediately, or vertically, below the path of container transfer.

According to one embodiment, the at least one quayside support leg may define an opening allowing for long side passage of a container. The size of the opening may be configured to allow passage of a 45 foot container of 13.72 m while maintaining a clearance of about 0.4 m in all directions. Further it may be preferred to configure the opening to allow for diagonal passage of a 45 foot container, i.e. the passageway may have a longitudinal opening of at least 14.75 m. Furthermore, the height of the opening may be configured such that the container incl. optional spreader etc. is ample to secure passage.

According to one embodiment, the quayside support leg may constitute a pair of quayside supporting legs.

According to one embodiment, the at least one quayside support leg and the at least one landside support leg may be arranged to travel on rails by means of bogies.

According to one embodiment, the least one landside support leg may be arranged to travel on an elevated rail by means of at least one bogie. The elevated rail may be elevated to a height allowing for passage of cargo vehicles carrying cargo underneath the elevated rail. This allows for, in case the landside legs of several cranes are positioned closely together and thereby obstructing traffic to and from the landside handling area in-between the legs of the cranes, easy transfer of containers between the cranes and container terminal facility.

The free height for passage below the landside rail may be in the range of 17 m. The horizontal distance between vertical crane rail supports may be minimum 30 m. Consequently, truck heads with chassis, straddle carriers or automated vehicles may enter the area below the crane at essentially any location greatly reducing congestion under the cranes.

According to one embodiment, the present invention may take the form of a set of cargo cranes where, in a first crane, the quayside support leg may define an opening allowing for long side passage of a container in a first height. In a second crane, the quayside support leg may define an opening allowing for long side passage of a container in a second height. The first height and the second height may be chosen such that the set of cargo cranes may approximate each other such that the set of cargo cranes are able to simultaneously transfer containers to and from two neighbouring container holds of a containership. This prevents that, when the set of cranes are closely positioned such as when loading and unloading containers to or from two neighbouring container holds, the support leg or legs of one crane block or obstruct free transfer of a container handled by the neighbouring crane.

According to one embodiment, the distance between boom centre lines of a first cargo crane and a second cargo crane may be less than 14 meters, alternatively less than longitudinal centre distances of a containerships cargo holds.

According to one embodiment, the openings in the quayside supporting legs of the set of cranes may define passageways for containers wherein a container passing through the opening of the first crane is passed over a portion of the quayside support leg of the second crane and optionally vice versa.

According to one embodiment, the landside support legs and the quayside support legs of each of the cranes may be, by means of bogies, arranged to travel on a total of four dedicated rails extending substantially parallel to the quay. This allows for one crane being able to travel behind another crane such that the quayside and/or support legs of the cranes may overlap.

According to one embodiment, the landside support legs of the set of cranes may be configured to travel on a rail elevated to a height allowing for passage of cargo vehicles carrying cargo underneath the elevated rail.

According to one embodiment, the container mentioned may be 40 or 45 foot container of the ISO height of 8'6" and/or high cube height of 9'6".

### Brief description of the drawing

Figure 1 illustrates a principal side view of two cranes one of which carrying a container above a ship berthed alongside a quay.
Figure 2 shows a crane including the landside supporting leg of a crane according to the present invention.
Figure 3 shows a quayside view of two cranes according to the present invention.
Figure 4 shows a quayside view of a set of cranes according to the present invention.

### Detailed description of the invention with reference to the figures

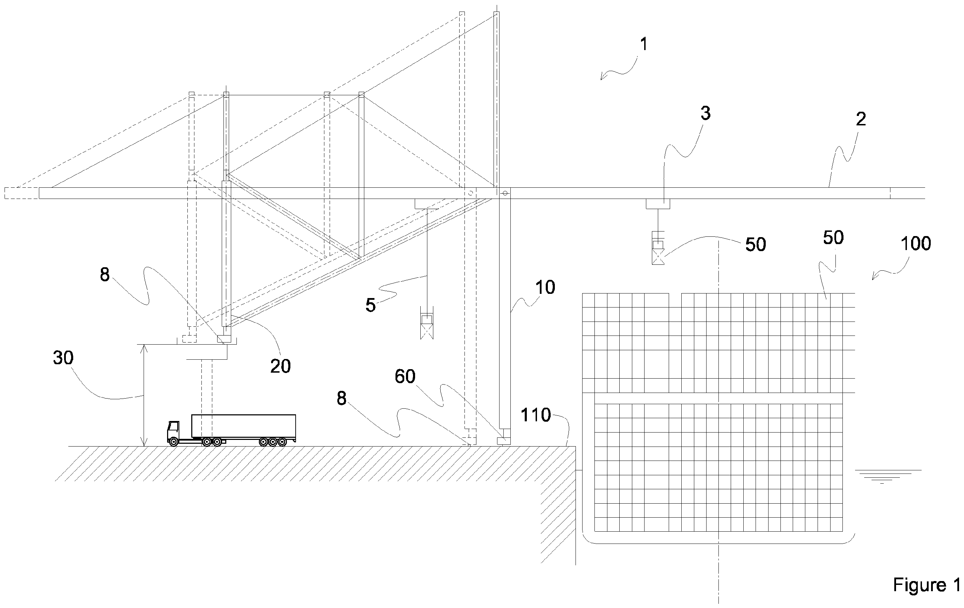

Figure 1 illustrates a principal side view of two cranes one of which carrying a container 50 above a ship 100 berthed alongside a quay 110. For illustrative purposes, one crane is shown in broken lines.

As can be seen in the figure, the two cranes are configured to move along four vaguely illustrated tracks 8 all of which are arranged essentially parallel to the ship 100 and to the quay 110.

The quayside support legs 10 of the cranes are configured to move on tracks 8 arranged essentially in level with the quay 110, and the landside support legs 20 are, in the illustrated embodiment, configured to move on elevated rails 8.

Elevating the landside tracks as shown in the figure greatly facilitate traffic to and from the cranes landside handling area.

The landside crane rails 8 and/or the quay side crane rails 8 for the crane shown in solid lines may, as can be seen, be offset a distance e.g. of 3.5 m with respect to the crane shown in broken lines. By this, the support legs of the cranes may partially pass each other. This allows the cranes to proximate each other until a centre to centre distance of the cranes in the range of 13.2 m is obtained although the each of the cranes incl. bogies 60 has a width in the range of 26.4 m. The width of the support leg structures may, despite the narrow centre to centre distance of the cranes, be in the range of 23.6 m for one crane and 19.6 m for crane another crane.

In order to obtain sufficient wind stability, the crane according to the present invention also benefit from the abovementioned double sets of crane rails at the landside and at the quayside respectively as the bogies 60 extend beyond the supporting legs of the cranes.

The distance between the supporting legs of a set of cranes, in the direction perpendicular to the crane rails, may be in the range of 1 m.

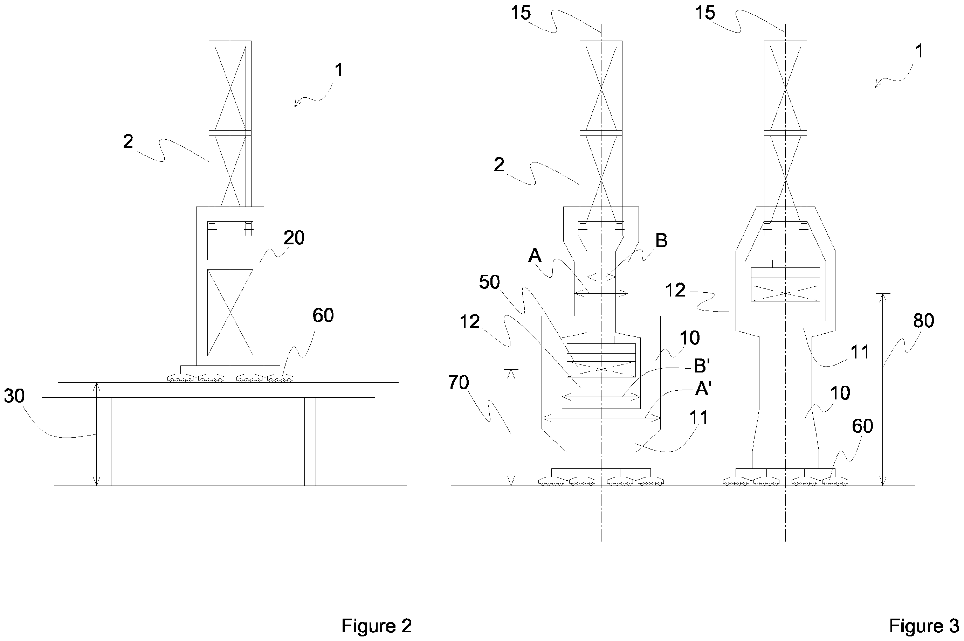

Figure 2 shows a landside supporting leg 20 of one embodiment of a crane according to the present invention. Again, the illustrated embodiment discloses a crane configured to move along an elevated landside track or rail.

The crane or the set of cranes, according to the present invention may, although not shown in the figures, be configured to operate on quayside rails and landside rails arranged in essentially corresponding heights.

Figure 3 shows a quayside view of a set of a set of cranes according to the second aspect of the present invention. As can be seen, the openings 12, or transfer openings 12, are arranged in different heights 70, 80.

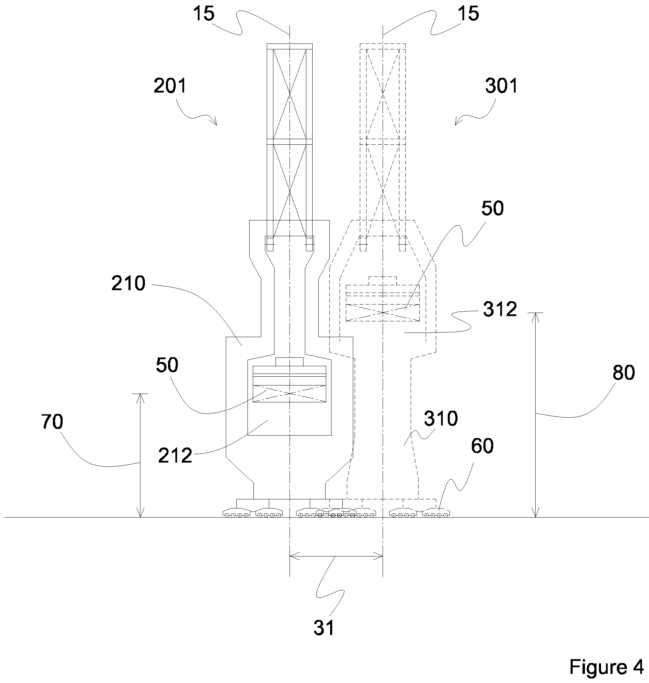

Figure 4 shows a quayside view of a set of cranes according to figure 3, however here, the cranes are positioned closely together. Also here, one crane is, for illustrative purposes, shown in broken lines.

In accordance with the invention, the cranes may be configured to operate closely together with centre line 15 distances of about 13.5 m to leave no bay of a ship 100 idle.

The opening 12, 212, 312, preferably is configured to allow long side passage of 45 foot containers. 45 foot containers have a length of 13.72 m. As the spreader incl. the remaining means for lifting the container under certain scenarios cause a container to move irregularly, the opening 12, 212, 312 preferably is configured to allow for passage of a 45 foot container oriented diagonally whereby the length, measured parallel to the quay, of the container may be e.g. 13.95 m.

A clearance of minimum of 0.4 m on each side of the passage for the container is considered sufficient, hence the opening 12, 212, 312 should be at least 14.75 m.

14.75 m opening is also sufficient for the passage of hatch covers of the ships' container holds.

As per the above, the quayside support legs of a set of cranes may be embodied with different designs. A first crane having a first quayside support leg may be provided with a wide opening arranged essentially in the middle of the support leg. A second crane may be provided with a wide opening arranged at the top of its support leg. The set or pair of cranes cannot have a wide passage overall the supporting legs of neighbouring cranes will obstruct transfer of containers.

The upper part of the crane according to the present invention may equate to that of a conventional crane configured for single or dual hoist operation etc.

The crane or the set of cranes according to the present invention may be provided with anti-sway means as well as automatic hoist + trolley operation. The operation may be carried out by means of a processor and software configured to prevent collision of cargo or spreader flippers with the quayside supports.

As the quay load increases, it is foreseen that reinforced quay walls in some sites of application may be required.

In summary, the crane concept as disclosed herein allows for doubling the berth capacity of container terminal facilities by the provision of a cargo crane, or a set of cargo cranes, configured for transferring containers to and from a ship birthed alongside a quay. The cargo crane, or the set of cargo cranes, includes:
- at least one quayside support leg supported by a bogie arranged to travel on a rail,
- at least one landside support leg supported by a bogie arranged to travel on a rail,
- a boom configured to extend over a ship birthed alongside a quay,
- a trolley displace ably connected to said boom, and
- container lifting means connected to said trolley.

The invention is novel and inventive in that said at least one quayside support leg in a first height define an outer horizontal width (A) and, in a second height, said at least one quayside support leg define an inner horizontal width (B') wherein said inner horizontal width (B') in said second height is greater or less than said outer horizontal width (A) of said quayside support leg in said first height.

The application and combination of features and solutions presented by the present invention is not limited to the presented embodiments. One or more features of one embodiment can and may be combined with one or more features of other embodiments, whereby not described but valid, embodiments of the present invention may be obtained.

The term "comprises/comprising/comprised of" when used in this specification incl. claims is taken to specify the presence of stated features, integers, steps or components but does not preclude the presence or addition of one or more other features, integers, steps, components or groups thereof.

## Claims

1. A cargo crane (1) for transferring containers (50) to and from a ship (100) birthed alongside a quay (110), said cargo crane (1) includes:
- at least one quayside support leg (10) supported by a bogie (60) arranged to travel on a rail,
- at least one landside support leg (20) supported by a bogie (60) arranged to travel on a rail,
- a boom (2) configured to extend over a ship (100) birthed alongside a quay (110),
- a trolley (3) displaceably connected to said boom (2), and
- container lifting means (5) connected to said trolley (3)
whereinsaid at least one quayside support leg (10) in a first height (80) defines an outer horizontal width (A) and, in a second height (70), said at least one quayside support leg (10) defines an inner horizontal width (B'), defining an opening (12), (212), (312) +wherein said inner horizontal width (B'), of said opening (12), (212), (312) in said second height (70) is greater than said outer horizontal width (A) of said quayside support leg (10) in said first height (80) **characterized in that** said opening (12), (212), (312) allows for long side passage of a 40 or 45 foot container (50).

2. A cargo crane according to claim 1, wherein said container lifting means (5), said trolley (3) and said boom (2) are configured to transfer containers (50) to or from a ship (100) by means of passing said containers (50) vertically over a portion (11) of said at least one quayside support leg (10).

3. A cargo crane according to claim 1 or 2, wherein said at least one quayside support leg (10) define an opening (12) allowing for long side passage of a container (50).

4. A cargo crane according to any one or more of the foregoing claims, wherein said quayside support leg (10) constitutes a pair of quayside supporting legs.

5. A cargo crane according to any one or more of the foregoing claims, wherein said at least one quayside support leg (10) and said at least one landside support leg (20) is arranged to travel on rails by means of bogies (60).

6. A cargo crane according to any one or more of the foregoing claims, wherein said least one landside support leg (10) is arranged to travel on an elevated rail (8), by means of at least one bogie (60), **characterized in that** said elevated rail (8) is elevated to a height (30) allowing for passage of cargo vehicles carrying cargo underneath said elevated rail (8).

7. A set of cargo cranes (201), (301) both of which according to any one or more of the foregoing claims, where, in a first crane (201), said quayside support leg (210) define an opening (212) allowing for long side passage of a container (50) in a first height (70) and where, in a second crane (301), said quayside support leg (310) define an opening (312) allowing for long side passage of a container (50) in a second height (80) **characterized in that** said first height (70) and said second height (80) are chosen such that said set of cargo cranes (201), (301) may approximate each other such that said set of cargo cranes (201), (301) are able to simultaneously transfer containers to and from two neighbouring container holds of a containership.

8. A set of cargo cranes according to claim 7, wherein a distance (31) between boom centre lines (15) of said first cargo crane (201) and said second cargo crane (301) is less than 14 meters.

9. A set of cargo cranes according to claim 7 or 8, wherein said openings (212), (312) define passageways for containers wherein a container (50) passing through said opening (212) in said first crane (201) is passed over a portion of said quayside support leg (310) of said second crane (301) and vice versa.

10. A set of cargo cranes according to any one or more of the claims 7 - 9, wherein said landside support legs and said quayside support legs (210), (310) of each of said cranes (201), (301) are, by means of bogies (60) arranged to travel on a total of four dedicated rails extending substantially parallel to said quay (100).

11. A set of cargo cranes according to claim 10, wherein landside support legs of said set of cranes (201), (301) are configured to travel on a rail elevated to a height (30) allowing for passage of cargo vehicles carrying cargo underneath said elevated rail (8).

## Patentansprüche

1. Lastkran (1) zum Transportieren von Containern (50) auf ein und von einem Schiff (100), das längsseits eines Kais (110) angelegt hat, wobei der Lastkran (1) Folgendes einschließt:
- mindestens ein kaiseitiges Stützbein (10), gestützt von einem Fahrgestell (60), das zum Fahren auf einer Schiene angeordnet ist,
- mindestens ein landseitiges Stützbein (20), gestützt von einem Fahrgestell (60), das zum Fahren auf einer Schiene angeordnet ist,
- einen Ausleger (2), der so konfiguriert ist, dass er sich über ein längsseits eines Kais (110) angelegtes Schiff (100) erstreckt,
- eine Laufkatze (3), die verschiebbar mit dem Ausleger (2) verbunden ist, und
- Container-Hubmittel (5), das mit der Laufkatze (3) verbunden ist,
wobei mindestens ein kaiseitiges Stützbein (10) in einer ersten Höhe (80) eine äußere horizontale Breite (A) definiert, und wobei in einer zweiten Höhe (70) das mindestens eine kaiseitige Stützbein (10) eine innere horizontale Breite (B') definiert, eine Öffnung (12), (212), (312) definierend, wobei die innere horizontale Breite (B') der Öffnung (12), (212), (312) in der zweiten Höhe (70) größer als die äußere horizontale Breite (A) des kaiseitigen Stützbeins (10) in der ersten Höhe (80) ist, **dadurch gekennzeichnet, dass** die Öffnung (12), (212), (312) ein längsseitiges Passieren eines 40 Fuß- oder 45 Fuß-Containers (50) ermöglicht.

2. Lastkran nach Anspruch 1, wobei das Container-Hubmittel (5), die Laufkatze (3) und der Ausleger (2) konfiguriert sind, um Container (50) auf ein oder von einem Schiff (100) durch vertikales Passieren der Container (50) über einen Abschnitt (11) des mindestens einen kaiseitigen Stützbeins (10) zu transportieren.

3. Lastkran nach Anspruch 1 oder 2, wobei das mindestens eine kaiseitige Stützbein (10) eine Öffnung (12) definiert, die ein längsseitiges Passieren eines Containers (50) ermöglicht.

4. Lastkran nach einem oder mehreren der vorstehenden Ansprüche, wobei das kaiseitige Stützbein (10) ein Paar kaiseitige Stützbeine darstellt.

5. Lastkran nach einem oder mehreren der vorstehenden Ansprüche, wobei das mindestens eine kaiseitige Stützbein (10) und das mindestens eine landseitige Stützbein (20) angeordnet sind, um mittels Fahrgestellen (60) auf Schienen zu fahren.

6. Lastkran nach einem oder mehreren der vorstehenden Ansprüche, wobei das mindestens eine landseitige Stützbein (10) angeordnet ist, um auf einer erhöhten Schiene (8) mittels mindestens eines Fahrgestells (60) zu fahren, **dadurch gekennzeichnet, dass** die erhöhte Schiene (8) auf eine Höhe (30) angehoben ist, um das Passieren von Lastfahrzeugen, die Lasten transportieren, unter der erhöhten Schiene (8) zu ermöglichen.

7. Satz von Lastkränen (201), (301), beide nach einem oder mehreren der vorstehenden Ansprüche, wobei in einem ersten Kran (201) das kaiseitige Stützbein (210) eine Öffnung (212) definiert, die ein längsseitiges Passieren eines Containers (50) in einer ersten Höhe (70) ermöglicht, und wobei in einem zweiten Kran (301) das kaiseitige Stützbein (310) eine Öffnung (312) definiert, die ein längsseitiges Passieren eines Containers (50) in einer zweiten Höhe (80) ermöglicht, **dadurch gekennzeichnet, dass** die erste Höhe (70) und die zweite Höhe (80) derart gewählt sind, dass der Satz von Lastkränen (201), (301) sich derart einander nähern kann, dass der Satz von Lastkränen (201), (301) gleichzeitig Container zu und von zwei benachbarten Container-Laderäumen eines Container-Schiffs transportieren kann.

8. Satz von Lastkränen nach Anspruch 7, wobei ein Abstand (31) zwischen Auslegermittellinien (15) des ersten Lastkrans (201) und des zweiten Lastkrans (301) weniger als 14 Meter beträgt.

9. Satz von Lastkränen nach Anspruch 7 oder 8, wobei die Öffnungen (212), (312) Durchgänge für Container definieren, wobei ein Container (50), der durch die Öffnung (212) in dem ersten Kran (201) fährt, über einen Abschnitt des kaiseitigen Stützbeins (310) des zweiten Krans (301) gefahren wird und umgekehrt.

10. Satz von Lastkränen nach einem oder mehreren der Ansprüche 7 bis 9, wobei die landseitigen Stützbeine und die kaiseitigen Stützbeine (210), (310) jedes der Kräne (201), (301) mittels Fahrgestellen (60) angeordnet sind, um auf insgesamt vier dedizierten Schienen zu fahren, die sich im Wesentlichen parallel zu dem Kai (100) erstrecken.

11. Satz von Lastkränen nach Anspruch 10, wobei landseitige Stützbeine des Satzes von Kränen (201), (301) konfiguriert sind, um auf einer Schiene zu fahren, die auf eine Höhe (30) angehoben ist, die das Passieren von Lastfahrzeugen, die Lasten transportieren, unter der erhöhten Schiene (8) ermöglicht.

## Revendications

1. Grue de chargement (1) pour le transfert de conteneurs (50) à destination et en provenance d'un navire (100) accosté le long d'un quai (110), ladite grue de chargement (1) comprenant :
- au moins un pied d'appui côté quai (10) soutenu par un bogie (60) agencé de façon à se déplacer sur un rail,
- au moins un pied d'appui côté terre (20) soutenu par un bogie (60) agencé de façon à se déplacer sur un rail,
- une flèche (2) conçue pour se déployer au-dessus d'un navire (100) accosté le long d'un quai (110),
- un chariot (3) relié mobile à ladite flèche (2) et
- un moyen de levage de conteneurs (5) relié audit chariot (3)
dans laquelle au moins un pied d'appui côté quai (10) dans une première hauteur (80) définit une largeur horizontale extérieure (A) et, dans une deuxième hauteur (70), ledit ou lesdits pieds d'appui côté quai (10) définissent une largeur horizontale intérieure (B') définissant une ouverture (12), (212), (312) +dans laquelle ladite largeur horizontale intérieure (B') de ladite ouverture (12), (212), (312) dans ladite deuxième hauteur (70) est supérieure à ladite largeur horizontale extérieure (A) dudit pied d'appui côté quai (10) dans ladite première hauteur (80) **caractérisée en ce que** ladite ouverture (12), (212), (312) permet le passage d'un conteneur de 40 ou 45 pieds (50) se présentant sur son côté long.

2. Grue de chargement selon la revendication 1, dans laquelle ledit moyen de levage de conteneurs (5), ledit chariot (3) et ladite flèche (2) sont conçus pour transférer des conteneurs (50) à destination ou en provenance d'un navire (100) en faisant passer lesdits conteneurs (50) verticalement sur une partie (11) dudit ou desdits pieds d'appui côté quai (10).

3. Grue de chargement selon la revendication 1 ou 2, dans laquelle ledit ou lesdits pieds d'appui côté quai (10) définissent une ouverture (12) permettant le passage d'un conteneur (50) se présentant sur son côté long.

4. Grue de chargement selon une quelconque ou plusieurs des revendications précédentes, dans laquelle ledit pied d'appui côté quai (10) constitue une paire de pieds d'appui côté quai.

5. Grue de chargement selon une quelconque ou plusieurs des revendications précédentes, dans laquelle ledit ou lesdits pieds d'appui côté quai (10) et ledit ou lesdits pieds d'appui côté terre (20) sont agencés de façon à se déplacer sur des rails au moyen de bogies (60).

6. Grue de chargement selon une quelconque ou plusieurs des revendications précédentes, dans laquelle ledit ou lesdits pieds d'appui côté terre (10) sont agencés pour se déplacer sur un rail surélevé (8) au moyen d'au moins un bogie (60), **caractérisée en ce que** ledit rail surélevé (8) est surélevé à une hauteur (30) permettant le passage de véhicules de fret transportant une cargaison au-dessous dudit rail surélevé (8).

7. Ensemble de grues de chargement (201), (301) selon une quelconque ou plusieurs des revendications précédentes, dans lequel, dans une première grue (201), ledit pied d'appui côté quai (210) définit une ouverture (212) permettant le passage d'un conteneur (50) se présentant sur son côté long dans une première hauteur (70) et dans lequel, dans une deuxième grue (301), ledit pied d'appui côté quai (310) définit une ouverture (312) permettant le passage d'un conteneur (50) se présentant sur son côté long dans une deuxième hauteur (80) **caractérisé en ce que** ladite première hauteur (70) et ladite deuxième hauteur (80) sont choisies de telle sorte que les grues dudit ensemble de grues de chargement (201), (301) puissent se rapprocher et de telle sorte que les grues dudit ensemble de grues de chargement (201), (301) puissent transférer simultanément des conteneurs à destination et en provenance de deux cales à conteneurs voisines d'un porte-conteneurs.

8. Ensemble de grues de chargement selon la revendication 7, dans lequel une distance (31) entre les lignes centrales (15) des flèches de ladite première grue de chargement (201) et de ladite deuxième grue de chargement (301) est inférieure à 14 mètres.

9. Ensemble de grues de chargement selon la revendication 7 ou 8, dans lequel lesdites ouvertures (212), (312) définissent des passages pour conteneurs, dans lequel un conteneur (50) passant à travers ladite ouverture (212) dans ladite première grue (201) passe au-dessus d'une partie dudit pied d'appui côté quai (310) de ladite deuxième grue (301) et inversement.

10. Ensemble de grues de chargement selon une quelconque ou plusieurs des revendications 7 à 9, dans lequel lesdits pieds d'appui côté terre et lesdits pieds d'appui côté quai (210), (310) de chacune desdites grues (201), (301) sont, au moyen de bogies (60), agencés pour se déplacer sur un total de quatre rails dédiés s'étendant sensiblement parallèlement audit quai (100).

11. Ensemble de grues de chargement selon la revendication 10, dans lequel les pieds d'appui côté terre dudit ensemble de grues (201), (301) sont conçus pour se déplacer sur un rail surélevé à une hauteur (30) permettant le passage de véhicules de fret transportant des cargaisons sous ledit le rail surélevé (8).
